# EUROPEAN PATENT APPLICATION

(11) **EP 2 497 558 A1**
(43) Date of publication of application: **12.09.2012**
(21) Application number: 10828606.3
(22) Date of filing: 28.10.2010
(51) Int. Cl.: B01D 35/00, B65B 31/06, B65D 1/02, C12H 1/07

(54) **UNIVERSAL DEVICE FOR TREATING AND PURIFYING A LIQUID PRODUCT CONTAINED IN A RESILIENT DEFORMABLE CONTAINER AND FOR PREPARING A NEW PRODUCT THAT DIFFERS FROM THE ORIGINAL**

(30) Priority: 06.11.2009 RU 2009140905
(71) Applicant: Obschestvo S Ogranichennoi Otvetstvennostiyu "Eurostandart", Moscow 107-497 (RU)
(72) Inventor: ZHERDEV, Pavel Dmitrievich, Mytischi Moskovskaya obl. 141021 (RU); KISTEREV, Valeriy Evgenyevich, Moscow 105264 (RU)
(74) Representative: Sonn & Partner Patentanwälte
(86) International application number: PCT/RU2010/000629
(87) International publication number: WO 2011/056096

(57) **Abstract**

The invention relates to the food industry. Liquid products, including vodka, undergo treatment and purification by passing them through a mixture of sorbents contained between filtering materials. Each serving of the product, poured from the bottle into a drinking vessel, is subjected to treatment and purification at the time prior to consumption directly by the consumer. The treatment and production of a new product is done by forcing the product from the vessel at an optimum rate through a cartridge with fillers, which is achieved due to the required positive air pressure in the vessel's inner space produced by the consumer by squeezing the vessel. If any mineral flavoring and/or other agents are placed into the cartridge space, a new product, distinct from that contained in the vessel, may be obtained at the device outlet.

## Description

The invention relates to the food industry.

The invention is designed for individual purification and treatment of each single serving of a liquid product, poured from an elastically deformable vessel, during the time prior to being consumed by a customer, and for preparing a new product distinct from the original one contained in the vessel.

Known is a device for liquid product treatment and purification (ref. to Patent RU No. 2328523 dated 09.03.2007), containing a cartridge comprised of a casing, connected to the elastically deformable bottle neck, which casing houses a filter and a channel with a bypass valve.

The known device has a number of disadvantages. The first is that the known device's cartridge space housing the filter materials is not leak-tightly isolated from the vessel's interior space containing the liquid product; the cartridge fillers will, therefore, be wetted during transportation and storage, which is mostly not acceptable. For example, prolonged exposure of activated carbon to vodka results in an increase in aldehydes, content of which is subject to regulation. Another disadvantage is that there is an air channel penetrating all the filter materials, thus making it practically impossible to eliminate the effect of the liquid edge leakage along the channel's exterior surface; a certain portion of the liquid product in the known device will, therefore, pass to the drinking vessel bypassing the filter materials, i.e. without being filtered or treated. Further disadvantage is that an air channel with a check valve is arranged within the cartridge space housing the filtering materials and sorbent, thus making it impossible to organize automated rapid assembly of the device at the same time with filling the cartridge inner space with appropriate fillers.

The technical result to be obtained by the invention consists in eliminating the above disadvantages. The invention is further aimed at creating:
- an easily producible inner separator between the liquid product vessel's interior space and the cartridge filler space during the product storage and transportation, and their interconnection at the time the product is being consumed;
- a volume control mechanism to replace the liquid product extracted from the vessel with environmental air, which mechanism shall not reduce the effective sectional area of the cartridge, shall prevent the edge effect occurrence, and shall not encumber installation of cartridge fillers of various shapes and sizes, including during automated rapid assembly of the cartridge, i.e. a volume control mechanism without any purposefully arranged air channel penetrating the cartridge;
- a versatile design of the device and the cartridge to enable operation of the device with as large as possible range of fillers to provide treatment and purification of various types of liquid products, including vodka, and prepare various new products distinct from the original one contained in the vessel;
- a set of cartridge fillers providing filtration and treatment of vodka and other beverages;
- a design of the device, which, based on state-of-the-art manufacturing technologies, enables automated mass production with low costs so that consumers may use it as an expendable device at an affordable price.

The above technical result is achieved by means of a multi-purpose device for treatment and purification of a liquid product contained in an elastically deformable vessel, and for obtaining a new product distinct from the original contained in the vessel, which device comprises an elastically deformable vessel with a neck, a coupler connected to the vessel neck, a spout fitted on the coupler, a cartridge with a space for fillers and apertures in its side walls, which is located in the spout with the capability of limited shifting within it, a mechanism for making up for the volume of liquid product, extracted from the vessel, with ambient air, which mechanism includes a cartridge acting as a check valve, a spout with a valve seat at its inner surface, and an annular air duct in the form of a gap spacing between the cartridge's exterior surface and spout's inner surface, and an inner separator formed by a plunger, provided at the cartridge, and a central aperture in the coupler. The device is sealed with a female threaded cap for connection with the coupler.

According to the claimed invention, the separator, provided by the plunger, formed at the cartridge's lower side wall, and the central aperture in the coupler, which aperture has a configuration corresponding to the plunger, is integrated into the device by appropriately configuring the separator components. When the device is closed, the plunger leak-tightly seals the aperture in the coupler, thus preventing the liquid product, contained in the vessel, from leaking into the cartridge space housing the fillers. When the device is being opened, the cartridge with the plunger travels longitudinally with respect to the coupler and opens the central aperture, thus enabling passage of the liquid product from the vessel into the cartridge with fillers. Presence of the separator according to the claimed invention enables using the cartridge fillers made from materials and ingredients that cannot retain their necessary properties, if exposed during a long time to the effects of the product subject to treatment. This results in a considerable extension of the device's functional capabilities. The spout may be rigidly and leak-tightly connected to the coupler by a lock-on connection, or a leakproof slip joint with the possibility of limited shifting with respect to the coupler. The spout may be made from a transparent material. The coupler may be connected to the vessel neck by any known method. The closing cap may be made as a small cup of a transparent material to be used by consumers as a drinking vessel. The closing cap in the device may be part of the separator by acting with its inner projection on the cartridge with the plunger, thus closing the liquid product vessel.

According to the claimed invention, the mechanism for making up for the volume of liquid product, extracted from the vessel, with ambient air, is configured on the basis of the device components by manufacturing them in the required shape. The mechanism for making up for the liquid product volume is comprised by a cartridge, acting as an isolation and check valve, and a spout with a ring seat for a valve provided at its inner surface. An annular space between the cartridge lateral surface and the spout inner surface is functioning as an air duct in the device. The annular space opens when the cartridge travels longitudinally towards the vessel and the vessel pressure is lower than the ambient pressure, and closes when the cartridge travels longitudinally towards the spout outlet and the vessel pressure is higher than the ambient pressure. The proposed design of the volume control mechanism for making up for the liquid product volume, extracted from the vessel, with ambient air, used in the claimed invention, enables arranging for the supply of the necessary ambient air volume into the vessel to ensure that the time for filling the drinking vessel is comfortable for the consumer. Furthermore, such design of the volume control mechanism neither reduces the effective sectional area of the cartridge, nor impedes installation of fillers of various shapes and sizes in the cartridge space (including during automated rapid assembly of the device), since there is no any purposefully arranged air duct, penetrating the cartridge, with a check valve.

According to the claimed invention, the cartridge is a casing with an inner space for fillers and apertures for the product flow in its side walls. The cartridge casing may be comprised of two interconnected components: a lower component and an upper component. The cartridge and its components may have any configuration depending on the filler, functions to be performed and the shape of the device's components with which the cartridge interacts during operation. The apertures in the cartridge side walls may be of any size and shape depending on the purpose of the device, filler type and filtering material rating. This device's cartridge may act as an isolation and check valve. A plunger of the separator, a projection to interact with the closing cap, and flexible tabs preventing closure of the product vessel during the volume control mechanism operation, may be provided at the cartridge.

If filtering materials and appropriate sorbents are used as the cartridge fillers according to the claimed invention, the device is capable of providing purification and treatment of potable water, poured in the vessel, to remove foreign matter, noxious impurities and odors.

If filtering materials of appropriate rating and mineral additives are used as the cartridge fillers according to the claimed invention, the device is capable of providing potable water with a mineral composition as required for the consumer.

If filtering materials of appropriate rating, flavoring and other additives are used as the cartridge fillers according to the claimed invention, the device is capable of providing a wide range of beverages, including effervescent ones, based on the same original product poured into the vessels during bottling at a production facility.

If filtering materials of appropriate rating and an activated carbon fiber based sorbent (more efficient than activated carbon) are used as the cartridge fillers according to the claimed invention, the device is capable of providing further treatment of water at the time of consumption by removing odor nuisances and after-effects of storage.

If filtering materials of appropriate rating and pelletized or powdered rapidly dissolving pharmaceuticals are used as the cartridge fillers according to the claimed invention, the device is capable of providing for preparation of a required medicinal solution based on the potable water, contained in the vessel.

The device may be equipped with a first opening indicator in the form of a tear-off ring, connected to the coupler through a number of perforations, or a perforated wrap-around label on the closing cap and the vessel neck.

The first embodiment of the device is shown in Fig. 1 to 3. Fig. 1 shows the device when closed. Fig. 2 shows the device when open during a liquid product pouring into a drinking vessel with the valve closed. Fig. 3 shows the device in the time when the liquid product volume, pressed out from the vessel, is being made up with ambient air with the valve open.

A closing cap 1 is fixed on a coupler 2 of the device by means of a thread 3. A spout 4 is configured as follows: a narrow outlet 5 is provided at the upper part, as well as a seat 6 to ensure leak-tight sealing of the spout outlet and the entire device; beneath in the wider part at the inner surface, a seat 7 is provided for loose, non-tight installation of the cartridge with fillers, limited from below by a discontinuous collar 8 at the spout inner surface and the volume control mechanism valve ring seat 9 from above. A stopping collar 10, limiting longitudinal travel of the spout with respect to the coupler, and a supporting collar 11 are provided at the spout's wider portion inner surface. The cartridge is comprised by leak-tightly interconnected upper component 12 and a lower component 13. The upper component is designed in the form of a lid with apertures 14 for the treated liquid flow. A collar 15 is provided at the cartridge upper component's exterior side surface for tight lock-on fixing to the cartridge lower component; a conical surface 16 of a valve is formed at the top along the perimeter. The lower component consists of an upper wide cylindrical portion with a space 17 for fillers 18 and a lower portion comprised by ribs 19 with the separator's plunger 20, provided at their bottom end. The separator mechanism's plunger 20 is connected to the cartridge lower component 13 side wall by radially extending vertical ribs 19 with inter-rib apertures 21, supporting the cartridge filler on the one side and acting as the plunger base on the other. The ribs have a cylindrical throat (recess) 22 along their centerline at the cartridge space 17 side for free flow of the liquid product through all sectors formed by the vertical ribs. The device coupler 2 is cylinder-shaped and has an area 23 on its inner surface for the bottle neck. A seat 24 for the spout is provided at the coupler upper part. A collar 25 is provided at the coupler upper end exterior surface to limit longitudinal travel of the spout with respect to the coupler and to seal the slip joint between the coupler and the spout. A crosswise annular wall 26, connected to the casing lateral generatrix, with a central aperture 27 for the liquid product passage from the bottle, is provided inside the coupler. At the top of the annular wall 26 in the area of the central aperture, a seat 28 is provided for the separator plunger 20, and a skirt 29 to seal the joint between the neck and the coupler is provided at the side facing the vessel. Thread 30 is provided at the coupler inner lateral surface beneath the crosswise side wall for connection with the bottle neck. Thread 31 for connecting the coupler 2 with the closing cap 1 is provided at the coupler exterior lateral surface beneath the spout. A tear-off component in the form of ring 32 is provided at the coupler beneath the exterior thread to serve as a first opening indicator. The tear-off component is part of the coupler and is connected to it at the upper side portion through perforations 33. "Sawtooth"-type vertical grips 34 are provided at the tear-off component surface. When the closing cap is being screwed on the coupler, the grips do not come in contact with similar grips 35 at the cap's inner surface, while during screwing off they catch on them, in the result of which the ring tears off from the coupler and drops onto the bottle, thus indicating to the consumer that opening has occurred. A locking retainer in the form of a ring-shaped catch 36 is provided at the coupler inner surface beneath the inner thread to prevent removal of the coupler from the bottle neck.

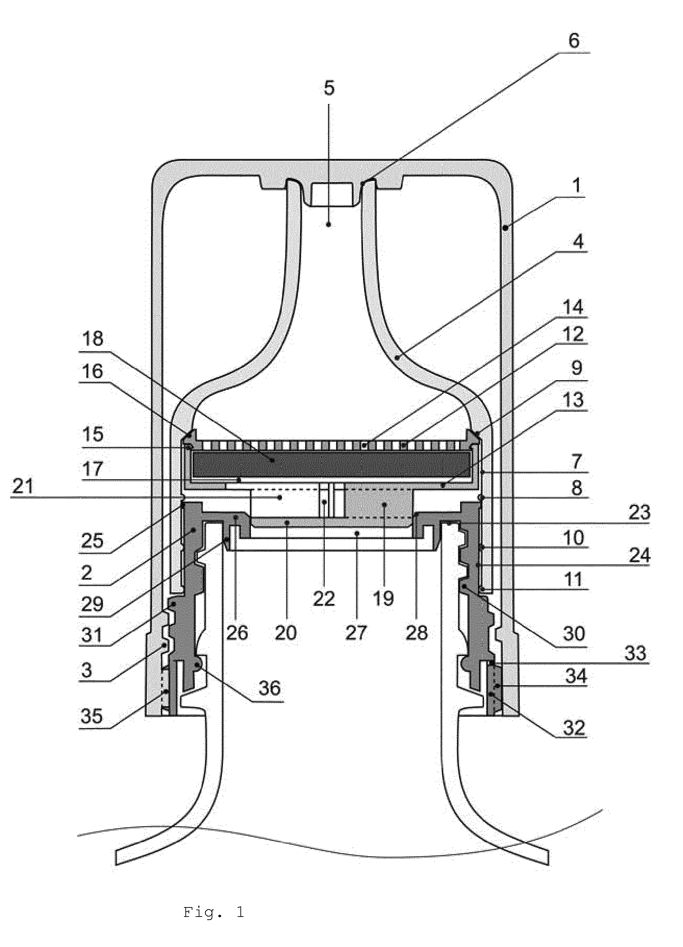

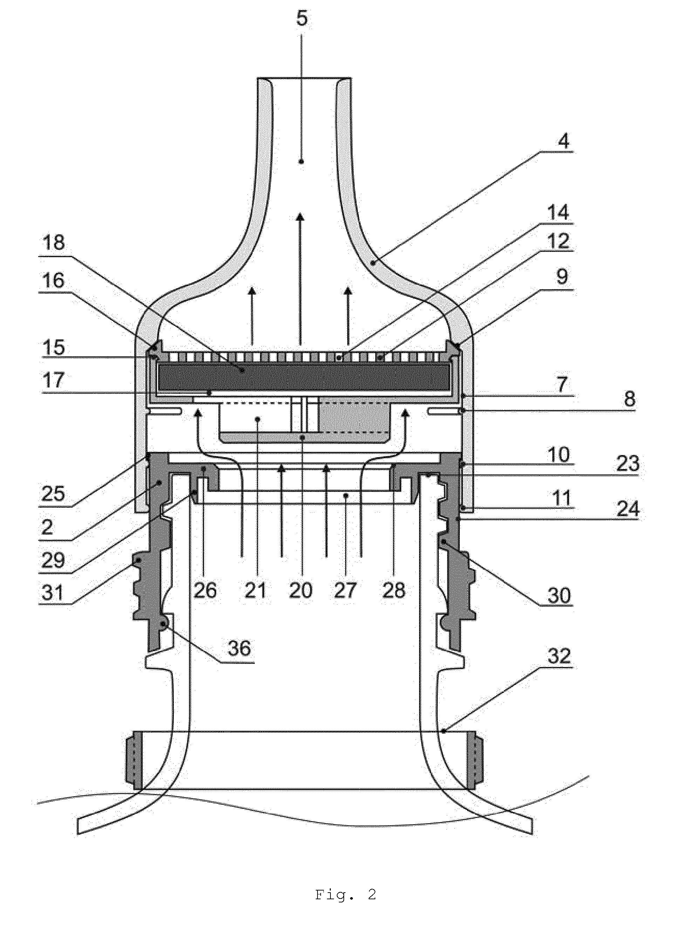

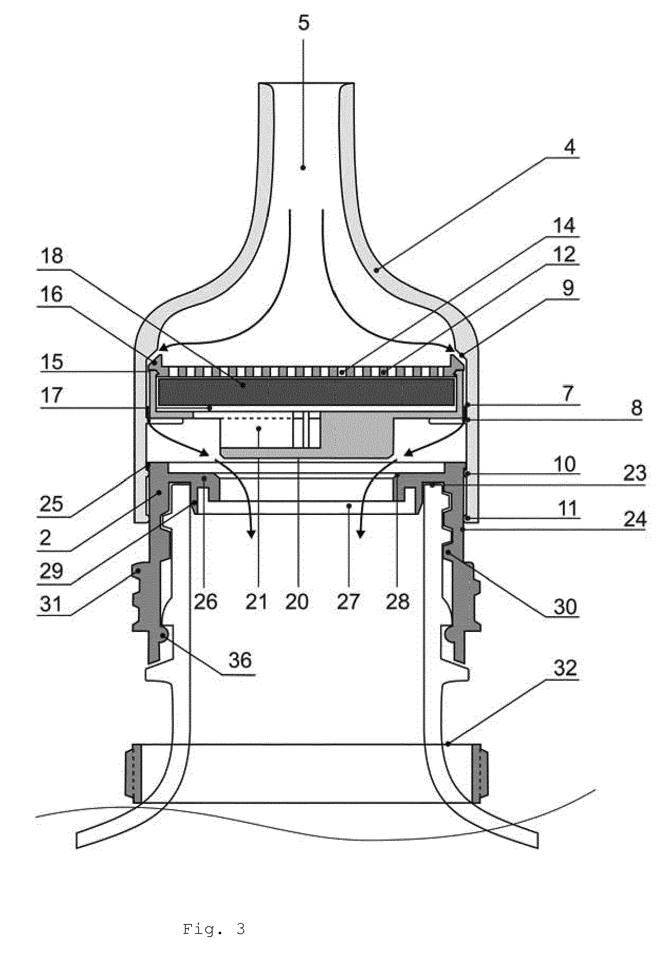

The device shown in Fig. 1 to 3 operates as follows. The bottle is taken in hand and the closing cap 1 is screwed off, at which time its grips 35 are interacting with grips 34 on the tear-off ring 32 external surface. The tear-off ring 32, being a detachable component of the first opening indicator, disconnects from the coupler and slips down along the neck onto the bottle, thus indicating to the consumer that the device has been opened. When the cap 1 is removed, partial unsealing of the device inner space from the spout outlet 2 to the separator plunger 20 occurs. The bottle is turned upside down, the spout is directed to the drinking vessel, and the bottle is then squeezed. Positive pressure builds up within the bottle, which acts on the plunger 20 that blocks the central cylindrical aperture 27. When the force acting on the plunger 20 exceeds the force of the plunger friction on the coupler aperture 27 inner surface and the force of the spout friction on the coupler external surface and collar 25, the plunger together with the cartridge and the spout travel longitudinally upwards with respect to the coupler. The coupler central aperture 27 opens, and the liquid product flows from the bottle through inter-rib apertures 21 into the cartridge space. The spout 4 continues its longitudinal travel with respect to the coupler 2 until the coupler central aperture 27 opens, or at least until the spout inner projection 10 stops at the coupler exterior collar 25. Thus the liquid product bottle unsealing occurs, and the device becomes completely operational. Unsealing of the bottle inner space may also be achieved by manually moving the spout 4 lengthwise with respect to the coupler 2 as far as it will go by the consumer himself/herself. Liquid product flows from the bottle through the now open central aperture 27 in the coupler 2 into the device's space confined by the cartridge and the coupler. Liquid product is then flows under pressure through apertures 21 in the cartridge's lower component into the cartridge space 17, where the fillers are housed and where the product is subject to treatment as required, and further through apertures 14 in the cartridge upper component 12 and the spout outlet 5 pours out the liquid product into a drinking vessel. The cartridge filler offers resistance to the liquid product flow through the cartridge, so at the time the bottle is pressed, the cartridge conical surface 16 squeezes up against the valve seat 9 at the spout, thus closing the annular gap between the cartridge lateral surface and the spout inner surface for any liquid product bypassing the filler. This ensures that the entire volume of liquid product, poured from the bottle, flows through the cartridge where it undergoes treatment and purification. To obtain the next serving of the liquid product, the consumer reduces squeezing on the vessel to allow elastic forces to restore the vessel to its original shape. When the pressure in the vessel's interior space is lower than the ambient pressure, air ingresses into the vessel through the spout aperture 5, gap between the cartridge and the spout, grooves in the collar 8 at the spout inner surface, the device's space confined by the cartridge and the coupler, and the central aperture 27 in the coupler. The gap between the cartridge lateral surface and the spout in the area of the cartridge seat 7 is formed as a result of the cartridge longitudinal travel towards the coupler 2 until bumping into the discontinuous collar 8 at the spout inner surface under the impact of the higher ambient pressure. When the liquid product volume, squeezed from the bottle, has been completely made up with air, the vessel restores to its original shape. The consumer again squeezes the liquid product vessel. The process continues until the required product level is obtained in the drinking vessel. To close the bottle, the consumer turns it neck up, allows it restoring to the original shape, installs the closing cap 1 and screws it on the thread until tight. At this moment, the cap 1 exerts a downward pressure on the spout 4; the latter, travelling lengthwise down the coupler exerts a downward pressure on the cartridge with the plunger; the cartridge moves downwards blocking the coupler central aperture 27 with the separator plunger 20, thus sealing the vessel. The operation may be repeated, if required.

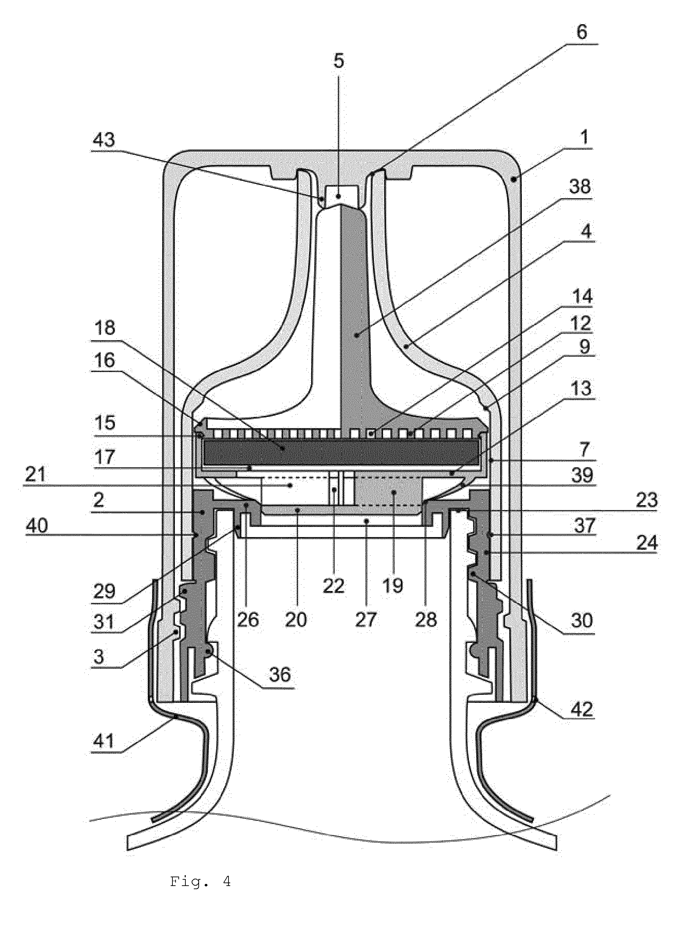

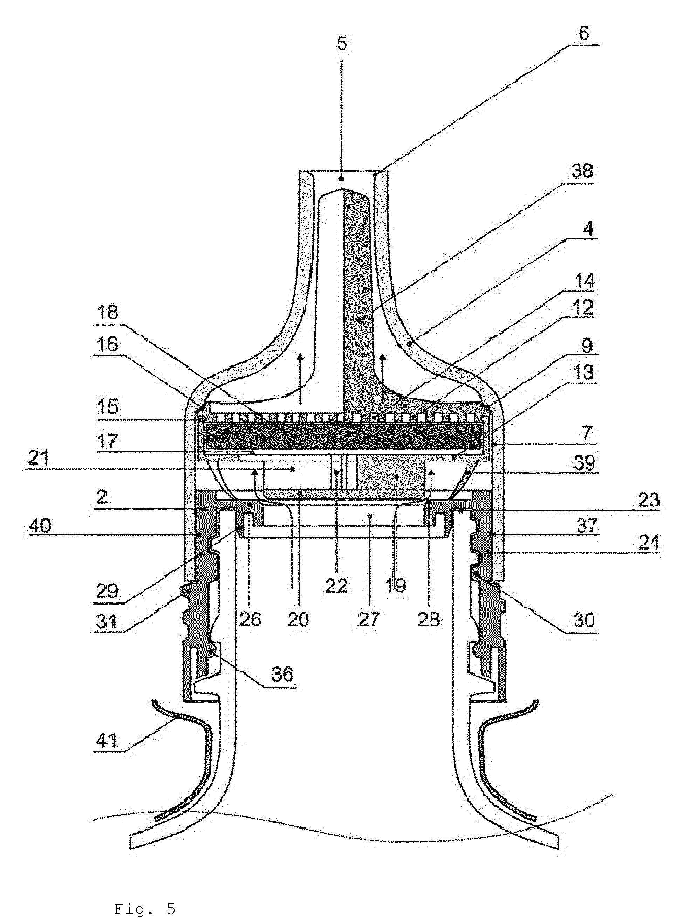

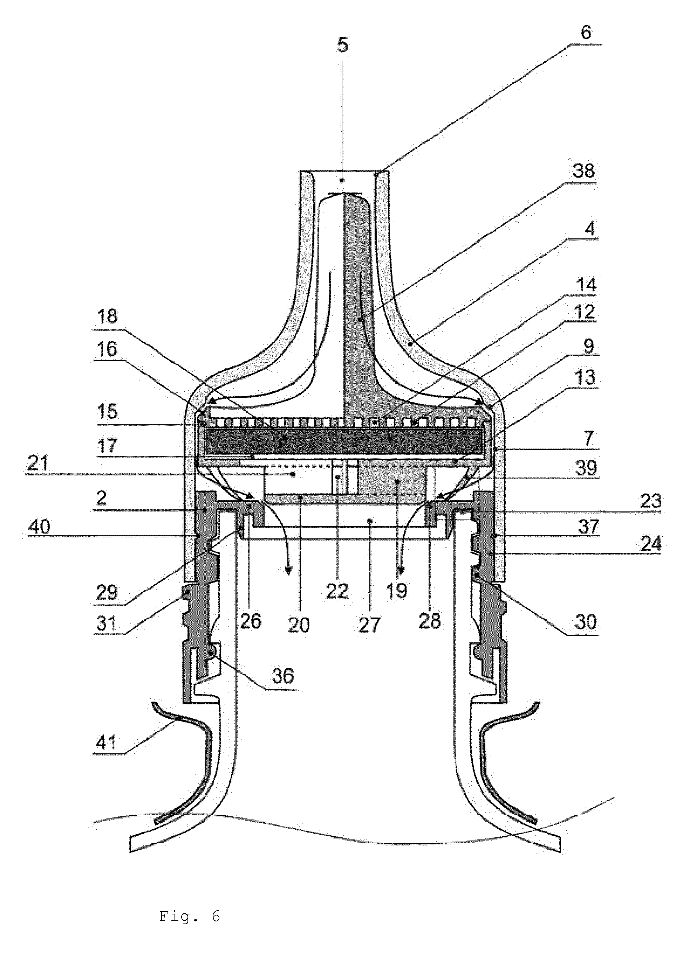

The second embodiment of the device is shown in Fig. 4 to 6. Its distinctive feature is that the device spout is rigidly and leak-tightly fixed on the coupler, while the cartridge with the plunger is resiliently pressed by elastic tabs provided at the cartridge around the plunger. Fig. 4 shows the device when closed. Fig. 5 shows the device when open during a liquid product pouring into a drinking vessel with the valve closed. Fig. 6 shows the device in the time when the liquid product volume, pressed out from the vessel, is being made up with ambient air with the valve open.

A closing cap 1 is fixed on a coupler 2 of the device by means of a thread 3. The spout 4 is configured as follows: a narrow outlet 5 is provided at the upper part, as well as a seat 6 to ensure leak-tight sealing of the spout outlet and the entire device; beneath in the wider part at the inner surface, a seat 7 is provided for loose, non-tight installation of the cartridge, confined from above by a valve ring seat 9. A collar 37 is provided at the end of the spout's wider portion inner surface for tight lock-on connection to the coupler. The cartridge is comprised by tightly interconnected upper component 12 and a lower component 13. The upper component is designed in the form of a lid with a projection 38 at its exterior surface and apertures 14 for the treated liquid flow. A collar 15 is provided at the cartridge upper component's exterior side surface for tight lock-on fixing to the cartridge lower component; a conical surface 16 of a valve is formed at the top along the perimeter. The lower component consists of an upper wide cylindrical portion with a space 17 for fillers 18 and a lower portion comprised by ribs 19 with the separator's plunger 20, provided at their bottom end. The cartridge lower component also has elastic tabs 39 provided around the plunger. The separator mechanism's plunger 20 is connected to the cartridge lower component 13 side wall by radially extending vertical ribs 19 with inter-rib apertures 21, supporting the cartridge filler on the one side and acting as the plunger base on the other. The ribs 19 have a cylindrical recess 22 along their centerline at the cartridge space 17 side for free flow of the liquid product through all sectors formed by the vertical ribs. The device coupler 2 is cylinder-shaped and has an area 23 on its inner surface for the bottle neck. A seat 24 with an annular groove 40 is provided at the coupler upper portion for leak-tight lock-on connection of the coupler to the spout. A crosswise annular wall 26, connected to the coupler's lateral generatrix, with a central aperture 27 for the liquid product passage from the bottle, is provided inside the coupler. At the top of the annular wall 26 surface in the area of the central aperture, a seat 28 is provided for the separator plunger 20, and a skirt 29 to seal the joint between the vessel neck and coupler. Thread 30 is provided at the coupler inner lateral surface beneath the crosswise side wall for connection with the vessel neck. Thread 31 for connecting the coupler with the closing cap 1 is provided at the coupler exterior lateral surface beneath the spout. A locking retainer in the form of a ring-shaped catch 36 is provided at the coupler inner surface beneath the inner thread to prevent removal of the coupler from the vessel neck. A wrap-around label 41 with perforations 42 is applied to the closing cap 1 exterior surface and the vessel neck to serve as a first opening indicator.

The device shown in Fig. 4 to 6 operates as follows. The bottle is taken in hand and the closing cap 1 is screwed off. When the closing cap 1 is being screwed off, it destroys the first opening indicator, represented by the wrap-around label 41, along the perforations 42, thus indicating to the consumer that the device has been opened. When the cap 1 is removed, partial unsealing of the device inner space from the spout outlet 5 to the separator plunger 20 occurs. The bottle is turned upside down, the spout is directed to the drinking vessel, and the bottle is then squeezed. Positive pressure builds up within the vessel (bottle), which acts on the plunger 20 that blocks the central cylindrical aperture 27. When the force acting on the plunger 20 exceeds the force of the plunger friction on the coupler aperture 27 inner surface, the plunger together with the cartridge travels longitudinally upwards with respect to the coupler and the spout. The coupler central aperture 27 opens, and the liquid product flows from the vessel through apertures 21 into the cartridge space. The cartridge continues its longitudinal travel with respect to the coupler 2 and the spout 4 until the coupler central aperture 27 opens. Thus the liquid product bottle unsealing occurs, and the device becomes completely operational. Liquid product flows from the vessel through the now open central aperture 27 in the coupler 2 into the device's space confined by the cartridge and the coupler. Liquid product then flows under pressure through inter-rib apertures 21 in the cartridge's lower component into the cartridge space 17, where the fillers are housed and where the product is subject to treatment as required, and further through apertures 14 in the cartridge upper component 12 and the spout outlet 5 pours out in a drinking vessel. The cartridge filler offers resistance to the liquid product flow through the cartridge, so at the time the bottle is pressed, the cartridge conical surface 16 squeezes up against the valve seat 9, thus closing the annular gap between the cartridge lateral surface and the spout inner surface for any liquid product bypassing the filler. This ensures that the entire volume of liquid product, poured from the vessel, flows through the cartridge where it undergoes treatment and purification. To obtain the next serving of the liquid product, the consumer reduces squeezing on the vessel to allow elastic forces to restore the vessel to its original shape. When the pressure in the vessel's interior space is lower than the ambient pressure, air ingresses into the vessel through the spout aperture 5, gap between the cartridge and the spout, the device's space confined by the cartridge and the coupler, and the central aperture 27 in the coupler. The gap between the cartridge exterior surface and the spout inner surface in the area of the cartridge seat 7 is formed as a result of the cartridge longitudinal travel towards the coupler 2 until elastic tabs 39 bump into the coupler crosswise ring wall 26. The tabs 39 prevent the plunger 20 from closing the coupler central aperture 27 under the impact of the higher ambient pressure. When the liquid product volume, squeezed from the vessel, has been completely made up with ambient air, the vessel restores to its original shape. The consumer again squeezes the liquid product vessel. The process continues until the required product level is obtained in the drinking vessel. To close the bottle, the consumer turns it neck up, allows it to restore to the original shape, installs the closing cap 1 and screws it on the thread until tight. At this moment, the cap 1 with the collar 43 on its side wall inner surface exerts a downward pressure on the cartridge collar 38; the latter, travelling lengthwise down exerts a downward pressure on the spout seat 7; the elastic tabs 39 crease (deflect) under the effect of a stronger force, and the separator plunger 20 blocks the coupler central aperture 27, thus sealing the vessel. The operation may be repeated, if required.

The above are only few of the preferred embodiments of the invention; it is, however, obvious that, according to the attached Claims, other embodiments may be used, as well as combinations of individual units of the above embodiment examples within the scope of the present invention.

## Claims

1. A multi-purpose device for treatment and purification of a liquid product, contained in a vessel, and obtaining a new product distinct from the original one, **characterized in that** it contains: an elastically deformable vessel; a coupler connected to the vessel neck through a leak-proof joint; a spout leak-tightly fitted on the coupler with the capability of limited sliding lengthwise on the coupler; a cartridge with a space for fillers and apertures in its side walls, which cartridge is installed in the spout with an annular gap with the capability of free limited lengthwise movement within it; a mechanism for making up for the volume of liquid product, extracted from the vessel, with ambient air, which mechanism includes a cartridge with a filler acting as a check valve, a spout with a valve seat at its inner surface, and an annular air duct in the form of a gap spacing between the cartridge's lateral surface and spout's inner surface; a separator formed by a plunger, provided at the cartridge, and a central aperture in the coupler; a closing cap providing leak-proof closure of the device by means of a threaded connection with the coupler, and a first opening indicator.

2. A device according to Claim 1, wherein the spout is rigidly and leak-tightly mounted on the coupler, the cartridge has a projection at its side wall towards the spout outlet and elastic tabs thrusting against the coupler's side wall and thus preventing the vessel from sealing during the liquid product volume making up, which tabs are provided at the cartridge around the plunger, and the closing cap has a projection at its inner surface.

3. A device according to Claim 1, wherein the separator interconnects and disconnects the liquid product vessel inner space and the cartridge filler space by the spout with the cartridge lengthwise movement with respect to the coupler.

4. A device according to any of Claims 1, 2, wherein the separator interconnects the liquid product vessel inner space and the cartridge filler space through squeezing the elastically damped vessel and disconnects them by screwing on the closing cap.

5. A device according to any of Claims 1, 2, wherein the cartridge is comprised by leak-tightly interconnected upper and lower components with apertures in their side walls for the liquid product flow.

6. A device according to Claim 5, wherein the cartridge's upper component is designed as a lid with apertures for the product flow, and a conical valve surface is formed around its perimeter.

7. A device according to Claim 5, wherein the cartridge's lower component consists of an upper wide cylindrical part with a space for fillers and a lower part with apertures formed by vertical ribs with a plunger at their bottom end.

8. A device according to any of Claims 1, 2, wherein the closing cap is designed as a small cup and may be used by consumers as a drinking vessel.

9. A device according to any of Claims 1, 2, wherein the first opening indicator includes a tear-off ring connected to the coupler through perforations and interacting with the cup through grips at its surface in such a manner that, when the cup is screwed off, the ring disconnects from the coupler.

10. A device according to any of Claims 1, 2, wherein the cartridge space is filled with filtering materials for the liquid product purification and/or sorbents for the product treatment.

11. A device according to Claim 11, wherein activated carbon fiber is used as a sorbent.

12. A device according to any of Claims 1, 2, wherein the cartridge space contains aromatizing agents and/or mineral and/or micro-bilogical and/or vitamin and/or other flavoring or gassing agents and food colorings.

13. A device according to any of Claims 1, 2, wherein liquid product optimizers and/or ionizers and/or structurizers are contained within the cartridge.

14. A device according to any of Claims 1, 2, wherein pharmaceuticals are contained within the cartridge.
